Europäisches Patentamt

European Patent Office

Office européen des brevets

(11) Numéro de publication : **0 209 453 B2**

(12) **NOUVEAU FASCICULE DE BREVET EUROPEEN**

(45) Date de publication du nouveau fascicule du brevet : **15.09.93 Bulletin 93/37**

(51) Int. Cl.$^5$ : **B29C 47/04, E06B 7/23**

(21) Numéro de dépôt : **86401530.0**

(22) Date de dépôt : **09.07.86**

(54) **Procédé d'obtention par co-extrusion de profilés comprenant au moins deux parties ayant des propriétés différentes.**

(30) Priorité : **19.07.85 FR 8511086**

(43) Date de publication de la demande :
**21.01.87 Bulletin 87/04**

(45) Mention de la délivrance du brevet :
**28.12.88 Bulletin 88/52**

(45) Mention de la décision concernant
l'opposition :
**15.09.93 Bulletin 93/37**

(84) Etats contractants désignés :
**DE GB IT NL SE**

(56) Documents cités :
**EP-A- 0 021 989**
**EP-A- 0 140 338**
**EP-A- 0 229 463**
**EP-A-01 403 38**
**DE-A- 2 004 379**
**DE-A- 2 257 257**
**DE-A- 3 131 551**

(56) Documents cités :
**DE-A- 3 207 795**
**DE-A- 3 339 249**
**FR-A- 1 466 020**
**FR-A- 2 310 207**
**FR-A- 2 366 476**
**FR-A- 2 378 935**
**FR-A- 2 468 717**
**JP-A- 5 730 646**
**US-A- 4 350 196**
**Katalog K 52, 1947, Gebr. Happich**
**Kunststoff-Lexikon, 6. Auflage**
**Kunststoff-Taschenbuch, 20. Auflage**

(73) Titulaire : **HUTCHINSON**
**2 rue Balzac**
**F-75008 Paris (FR)**

(72) Inventeur : **Faure-Bondat, Joseph**
-
**F-38500 Saint-Nicolas de Macherin (FR)**

(74) Mandataire : **Orès, Bernard et al**
**Cabinet ORES 6, Avenue de Messine**
**F-75008 Paris (FR)**

EP 0 209 453 B2

Jouve, 18, rue Saint-Denis, 75001 PARIS

## Description

La présente invention est relative à des profilés extrudés comprenant au moins une première et une seconde parties ayant des propriétés mécaniques différentes, la première partie ayant les propriétés des plastomères et la seconde les propriétés des élastomères. La présente invention est également relative à des procédés de production de tels profilés par extrusion.

On connaît déjà des objets ou des pièces divers, comprenant, par exemple, des parties en plastomère et d'autres parties en élastomère. Il s'agit, par exemple, de joints d'étanchéité, dont une partie en élastomère forme une lèvre souple, destinée à assurer la fonction proprement dite d'étanchéité, tandis qu'une partie en plastomère rigide est destinée à assurer la fixation du joint.

Des joints d'étanchéité de ce type sont décrits notamment dans le document EP-A-0 021 989 - au nom de la Demanderesse - qui précise qu'ils comportent une première partie, constituée par un talon rigide, et une deuxième partie, constituée par une lèvre d'étanchéité souple, l'une et l'autre étant réalisées en des compositions élastomères ou plastomères extrudables, dont les compositons élastomères sont vulcanisables, tandis que les compositions plastomères sont thermoplastiques.

La lèvre d'étanchéité précitée est pourvue d'au moins une strie rigide, réalisée en un élastomère ou plastomère présentant un faible coefficient de friction par rapport à une surface avec laquelle la lèvre vient en contact.

Il est évident qu'un joint composé, du genre susdit, offre des avantages sur des joints analogues, constitués par une seule pièce de plastomère ou d'élastomère. En effet, dans le cas d'un joint entièrement en plastomère, sa partie servant à la fixation peut être constituée, par exemple, en chlorure de polyvinyle rigide, et sa lèvre, en chlorure de polyvinyle souple; cependant, la souplesse de sa lèvre sera nécessairement inférieure à celle d'une lèvre en élastomère et, d'autre part, elle sera sujette à des phénomènes de déformation permanente, qui nuiront à la fiabilité du joint. Dans le cas, par contre, d'un joint constitué entièrement en élastomère, la lèvre peut présenter des propriétés de souplesse parfaitement satisfaisantes et durables, mais la partie du joint servant à sa fixation ne pourra que difficilement être rigidifiée, et cela au prix d'une fragilité plus grande que celle des plastomères relativement durs.

C'est pourquoi on a déjà réalisé, notamment pour l'application précédemment indiquée, des pièces composites obtenues par collage de deux profilés extrudés, l'un en plastomère et l'autre en élastomère. Les éléments composites de ce genre ont été utilisés notamment comme joint de porte pour les voitures automobiles. Ils présentent, cependant, l'inconvénient résultant de ce que je collage de deux pièces de rigidité différente est une opération coûteuse et difficile. D'autre part, il est impossible de coller entre eux certains plastomères et certains élastomères.

L'un des buts principaux de l'invention est de réaliser par une seule opération d'extrusion des profilés comprenant au moins une première partie ayant les propriétés des plastomères, et une seconde partie ayant les propriétés des élastomères de manière à combiner les propriétés avantageuses de ces deux types de matières: la facilité de mise en oeuvre, la rigidité élevée et la facilité de coloration des plastomères d'une part, la résilience et l'élasticité des élastomères d'autre part.

Jusqu'à présent, cependant, l'Homme de l'Art considérait comme pratiquement impossible l'obtention, par une seule opération d'extrusion, de profilés comprenant des parties en plastomère et des parties en élastomère. Ce préjugé défavorable de l'Homme de l'Art reposait sur les faits suivants: beaucoup de plastomères, et d'élastomères sont incompatibles entre-eux et ne peuvent donc être assemblés que par collage; d'autre part, les conditions d'extrusion, et notamment les températures d'extrusion des plastomères et les élastomères sont notablement différentes; les plastomères, qui sont thermoplastiques, doivent, pour conserver leur forme après extrusion, être refroidis à une température relativement basse, souvent très différente de celle à laquelle l'élastomère utilisé peut être vulcanisé avec une vitesse acceptable.

La présente invention a pour objet un procédé tel que formulé dans la revendication 1.

Selon que le point de ramollissement de la première composition et la température optimale de vulcanisation de la seconde composition sont plus ou moins éloignés, l'opération de vulcanisation par laquelle se termine le procédé selon la présente invention est susceptible de deux modalités différentes:

- dans le cas où la première composition présente un point de ramollissement nettement supérieur à la température optimale de vulcanisation de la seconde composition, le profilé extrudé est refroidi à ladite température optimale de vulcanisation, puis vulcanisé en continu à cette température, par exemple par passage continu dans un four à air chaud;

- dans le cas où, par contre, la première composition présente un point de ramollissement relativement voisin de la température optimale de vulcanisation de la seconde composition, le profilé extrudé est refroidi en-dessous du point de ramollissement de la première composition, puis soumis à un traitement continue de vulcanisation par chauffage préférentiel de la seconde partie, par exemple par passage continu du profilé dans un four à ultra-haute-fréquence, ou dans un four à infra-rouges, selon que la seconde composition est polaire ou non.

Les deux compositions utilisables pour la mise en oeuvre du procédé d'extrusion selon la présente invention, doivent être différentes, mais adaptées l'une à l'autre. Par exemple, la première et la seconde compositions sont constituées par l'un des couples suivants de matière: EPDM (éthylène-propylènediène-monomère)-polyéthylène; EPDM-polypropylène; caoutchouc nitrile-chlorure de polyvinyle, éventuellement surchloré; EPDM-TPO (composition contenant un polypropylène et un E.P.D.M. dans une proportion appropriée notamment de 90% et 10% en poids respectivement).

Au lieu d'être constituées chacune par un unique constituant, l'une au moins des deux compositions utilisées pour la mise en oeuvre du procédé d'extrusion selon la présente invention peut être constituée par un mélange. En particulier, la première composition peut être un mélange d'au moins un plastomère et un élastomère en proportions telles qu'elle demeure thermoplastique. Quant à la seconde composition, elle peut être constituée par un mélange d'au moins un élastomère et un plastomère en proportions telles qu'elle demeure vulcanisable.

Selon un mode de réalisation avantageux du procédé conforme à la présente invention, pour améliorer encore l'adhérence des matières plastomères et élastomères l'une à l'autre, on pourvoit la face de contact de l'une des parties en élastomère ou en plastomère, avec l'autre partie, d'une languette en même matériau, qui en est solidaire, qui avance dans cette autre partie et qui présente un profil propre à assurer une liaison mécanique avec ladite autre partie dans laquelle elle est emprisonnée.

Selon un autre mode de réalisation avantageux du procédé conforme à la présente invention, outre les première et deuxième compositions extrudables, la filière d'extrusion est alimentée avec une troisième composition extrudable qui présente les propriétés des peaux pelables telles que définies dans le Brevet Français n° 77 12512 au nom de la Demanderesse et qui est appliquée de préférence sur la surface extérieure de la partie en élastomère du profilé.

Selon encore un autre mode de réalisation avantageux du procédé conforme à la présente invention, la partie en plastomère est pourvue sur sa face opposée à sa face de jonction avec la partie en élastomère d'un couche de matière adhésive.

La présente invention a également pour objet des profilés composites extrudés obtenus à l'aide du procédé précédemment défini et destinés, notamment, à servir de joints de menuiserie, de balais d'essuie-glace , de clips pour le montage de serres, de joints de carrosseries de véhicules ou de machines, de bandes de protection latérales de véhicules ou de machines, de lécheurs de vitres, etc.

Selon un mode de réalisation avantageux de ces profilés composites extrudés, ceux-ci se composent d'une partie en plastomère et d'une partie en élastomère extrudés ensemble de manière à être solidaires l'un de l'autre par au moins l'une de leurs faces.

Selon un autre mode de réalisation avantageux de ces profilés composites extrudés, l'une des deux parties qui les composent, élastomère ou plastomère, et pourvue d'une projection extrudé en même matière, qui avance au-delà de celle de ses faces solidaires par extrusion de leur autre partie, en plastomère ou élastomère, et qui présente un profil tel qu'il fournit des éléments d'accrochage qui assurent en outre la liaison mécanique avec la partie dans laquelle ladite languette avance et est emprisonnée.

Selon encore un autre mode de réalisation avantageux de ces profilés composites extrudés, ils comportent une troisième partie extrudé avec les deux premières, qui présente les propriétées des peaux pelables et qui est appliquée par extrusion sur tout ou partie de la surface de la partie en élastomère.

Selon un autre mode de réalisation encore de ces profilés composites extrudés, leur partie en plastomère porte sur l'une de ses faces, et de préférence sur sa face opposée à celle qui est solidarisée, lors de l'extrusion, avec la partie en élastomère, une couche en matière adhésive pour permettre la mise en place de ces profilés sur des carrosseries ou analogues en vue d'en assurer la protection vis-à-vis des chocs.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:
- les figures 1 et 2 sont respectivement des vues en coupes transversales de deux profilés composites extrudés, conformes à la présente invention;
- les figures 3 à 7 sont respectivement des vues en coupes transversales de profilés composites extrudés, comportant une languette d'ancrage de l'une des parties du profilé, dans l'autre partie, et
- la figure 8 montre une vue partielle en coupe d'une bande de protection latérale.

Il doit être bien entendu, toutefois, que ces dessins et les parties descriptives correspondantes, sont donnés uniquement à titre d'illustration de l'objet de l'invention, dont ils ne constituent en aucune manière une limitation.

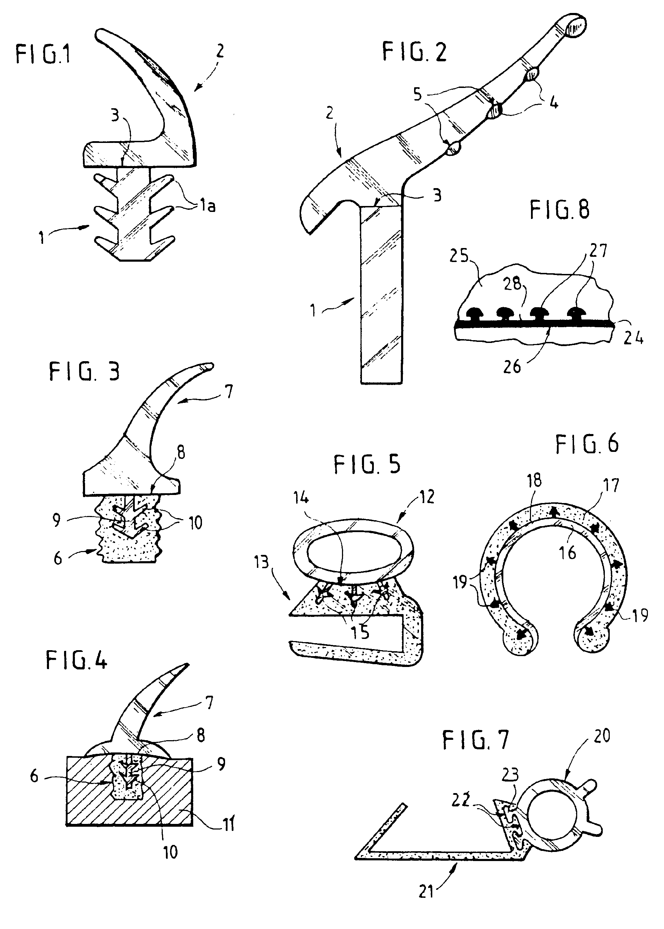

Le profilé illustré à la figure 1, en coupe transversale, est un joint de menuiserie, comprenant un élément de fixation 1, relativement rigide, muni latérale de saillies d'ancrage, 1a, et une partie élastiquement déformable, 2, formant lèvre d'étanchéité; le procédé selon la présente invention permet de réaliser un profilé composite de ce genre, 1-2, par une seule opération d'extrusion simultanée, d'une première composition, thermoplastique, à base d'un plastomère rigide, destinée à former l'élément de fixation 1 et d'une seconde composition vulcanisable, à base d'un élastomère, destinée à former la lèvre d'étanchéité 2, et cela dans des conditions telles qu'il existe une adhérence parfaite des deux parties 1 ou 2 du joint au niveau de leurs surfaces de contact 3.

Le profilé représenté en coupe transversale sur la figure 2 est une pièce d'étanchéité pour des surfaces qui peuvent être animées d'un mouvement relatif telle que des vitres, en particulier d'automobiles, cette pièce d'étanchéité étant par exemple du type décrit dans la Demande de Brevet n° 79 15650 déposée par la Demanderesse le 19 juin 1979, publiée sous le n° 2 459 415. Le procédé selon la présente invention permet de réaliser, par une seule opération d'extrusion, le profilé illustré à la figure 2, de telle façon qu'il comporte un talon de fixation 1, rigide, constitué par exemple en plastomére rigide, une lèvre souple 2, constituée par exemple en élastomère souple, et, sur la face d'application de la lèvre 2 sur la surface mobile (non représentée), des stries ou surépaisseurs longitudinales, 4, de faible superficie et de faible section, constituées par exemple en plastomére dur à faible coefficient de friction. Dans ce cas également, les différentes matières destinées à constituer respectivement les parties 1, 2 et 4 de la pièce d'étanchéité, sont extrudées simultanément dans des conditions appropriées pour assurer une parfaite adhérence, non seulement au niveau de la surface de raccordement 3 entre les parties 1 et 2 mais aussi au niveau des surfaces de raccordement 5 entre les parties 2 et 4.

On va décrire maintenant deux modes d'exécution du procédé selon la présente invention, qui permettent d'extruder des profilés tels que ceux illustrés aux figures 1 et 2 et précédemment décrits, ainsi que tous autres profilés comprenant au moins une première et une seconde parties ayant des propriétés mécaniques et physiques différentes, la première partie ayant les propriétés des plastomères, et, la seconde, les propriétés des élastomères.

Dans un premier mode d'exécution de l'invention, on utilise une première composition, thermoplastique, constituée essentiellement par du polyproylène, qui est extrudable vers 220°C, et une seconde composition vulcanisable, à base de l'élastomère EPDM, qui est extrudable à des températures à partir de 90°C et pouvant atteindre au maximum 150°C dans des cas extrêmes; on peut utiliser, par exemple, la seconde composition suivante, qui a des propriétés élastomériques:

| — | Buna AP.451 | 100 |
| — | Acide stéarique | 1 |
| — | Oxyde de zinc | 5 |
| — | Noir de carbone N.550 | 120 |
| — | Huile minérale paraffinique | 90 |
| — | Silice précipitée | 30 |
| — | Cire polyéthylène | 3 |
| — | Antioxygène AFLUX 42 | 3 |
| — | Soufre | 1,5 |
| — | Caloxol W.3 | 4 |
| — | Accélérateur Thiuram MS | 0,6 |
| — | » Vulkacit ZM | 1,0 |
| — | » Rhénocure AT | 2,0 |
| — | » Butyl Zimate | 1,2 |

Le procédé d'extrusion selon la présente invention utilise une extrudeuse d'un type connu, qui permet d'envoyer simultanément les deux compositions précédemment définies, dans la filière, à leurs températures respectives d'extrusion, notamment 220°C et 90°C, de manière que les deux compositions n'entrent pratiquement en contact l'une avec l'autre que dans la filière, et suivant leurs surfaces de raccordement dans le profilé extrudé, c'est-à-dire suivant la surface 3 dans le cas du profilé illustré à la figure 1, et suivant les surfaces 3 et 5 dans le cas du profilé illustré à la figure 2. A la sortie de la filière, le profilé extrudé est refroidi rapidement à une température voisine de 170°C, puis il est soumis à une opération de vulcanisation en continu, en le faisant passer dans un four à air chaud où une température constante de 170°C est maintenue; cette dernière température est, en effet, convenable pour vulcaniser la seconde composition, précédemment indiquée, en un temps relativement bref, correspondant au temps de passage du profilé à travers le four à air chaud.

Ce mode d'exécution du procédé selon la présente invention, et notamment la phase de vulcanisation de la composition élastomérique par passage dans un four à air chaud, est applicable, notamment, chaque fois

**4**

que la première composition, c'est-à-dire celle destinée à former la première partie du profilé, ayant les propriétés des plastomères, présente un point de ramollissement supérieur à la température de vulcanisation (170°C dans l'exemple ci-dessus) de la seconde composition, c'est-à-dire de celle qui est destinée à former la seconde partie du profilé ayant des propriétés proches des élastomères.

Dans un second mode d'exécution du procédé selon l'invention, on utilise comme première composition, par exemple un TPO, (c'est-à-dire une composition contenant 90% en poids de polypropylène et 10% en poids d'EPDM); cette première composition est thermoplastique et extrudable vers 220°C. Comme seconde composition, on peut utiliser la même seconde composition que celle utilisée dans le mode d'exécution précédemment décrit, à base d'EPDM, et extrudable à 90°C, cette seconde composition, qui est vulcanisable, étant, en outre, fortement chargée, par exemple par une proportion importante de noir de carbone, qui lui confère une forte polarité. Ces deux compositions sont alors extrudées comme on l'a décrit pour le mode d'exécution précédent, à des tempértures respectives de 220°C et de 90°C. A la sortie de la boudineuse, on refroidit le profilé vers 150°C, puis on le fait passer dans une ligne de four à ultra-haute-fréquence, où la température de la seconde partie du profilé extrudé, c'est-à-dire celle constituée par la seconde composition, est portée à 190°C en raison, notamment, de la polarité élevée que lui confère le noir de carbone, tandis que la température de la première partie du profile extrudé, celle qui présente des propriétés plastomériques, n'est pratiquement pas augmentée, sauf au niveau de la surface de contact avec la seconde partie, cette légère augmentation de température étant cependant insuffisante pour entraîner une modification de la forme de ladite première partie du profilé extrudé. Ce procédé de vulcanisation suppose, bien entendu, que la première composition, à base de plastomère, n'est pas elle-même polaire.

La phase de vulcanisation de la composition élastomérique, lorsqu'on opère selon le second mode d'exécution du procédé selon l'invention et que l'on veut utiliser une première composition plastomérique polaire, donc susceptible de s'échauffer et de se déformer sous l'action des hautes fréquences, est susceptible d'une variante évitant ces inconvénients. Dans cette variante, la vulcanisation a lieu en faisant passer le profilé extrudé dans un four où est produit un rayonnement infrarouge ayant un spectre convenablement choisi pour que ce rayonnement soit absorbé dans une proportion importante par la seconde partie du profilé extrudé, c'est-à-dire celle constituée par la composition à base d'élastomère.

Il peut s'avérer nécessaire d'utiliser le dispositif bien connu des hommes de l'Art sous le nom de conformateur ou de filière de conformation.

Il y a lieu de rappeler qu'il s'agit d'un procédé permettant de soutenir les profilés rigides, depuis la sortie de la filière, jusqu'à ce qu'ils soient descendus à une température où ils ne soient plus déformables.

Dans les fabrications classiques de profilés rigides, cette opération est effectuée immédiatement à la sortie de la boudineuse.

Dans le cas du procédé décrit, et pour tenir compte de la nécessité de maintenir le profil à une température suffisante pendant une durée d'au moins deux minutes nécessaires à la vulcanisation de la partie élastomérique, la conformation définitive pourra être effectuée après la phase de vulcanisation et à l'entrée d'un convoyeur de refroidissement qui sera généralement un tapis immergé dans l'eau.

En fonction du choix de composition de la seconde composition utilisée pour la mise en eouvre du procédé d'extrusion selon la présente invention, il sera également possible de vulcaniser la seconde partie du profilé extrudé en recourant à un procédé connu de vulcanisation, par exemple à la vapeur vive (sauf lorsque celle-ci serait susceptible d'hydrolyser la première composition à base de plastomère), à un lit fluidisé de billes de verre, ou à d'autres procédés connus de vulcanisation.

Le procédé selon la présente invention n'est pas limité aux modes d'exécution précédemment décrits; il englobe toutes leurs variantes. D'une façon générale, la première et la seconde compositions utilisées pour la mise en oeuvre de ce procédé, peuvent être chacune des mélanges d'au moins un plastomère et un élastomère, les proportions de ces mélanges étant choisies de telle façon que la première composition soit thermoplastique, et la seconde vulcanisable; en particulier, la première composition peut contenir 5 à 20% en poids d'élastomère, de même que la seconde composition peut contenir 5 à 20% en poids de plastomère.

Les figures 3 à 8 représentent des vues en coupes de profilés pourvus d'un moyen d'ancrage de l'une des parties dans l'autre.

Le profilé représenté aux figures 3 et 4 est un joint de menuiserie qui comprend un talon 6 en un matériau relativement rigide tel que PVC, extrudé conjointement avec un lèvre d'étanchéité 7 en élastomère tel que caoutchouc. Dans ce mode de réalisation, la liaison obtenue par extrusion, entre le talon 6 et la lèvre d'étanchéité 7 au niveau de leurs surfaces de contact 8 est renforcée par une liaison mécanique réalisée par la disposition d'une projection 9 en élastomère venue d'extrusion avec la lèvre 7, qui avance dans le talon 6 et dont le profil particulier (en forme d'ancre double dans l'exemple représenté à titre non limitatif aux figures 3 et 4) fournit des moyens d'accrochage 10 qui sont emprisonnés dans le talon 6 lors du processus d'extrusion sans pouvoir s'en échapper. La figure 4 illustre la mise en place du profilé de la figure 3, utilisé en tant que joint de bâtiment, dans une rainure 11 prévue à cet effet dans un élément de construction, dans laquelle est encastré le talon 6 en PVC, de préférence rigide, qui exerce, de ce fait, une pression sur la projection 9, laquelle pression est transmise à la lèvre 7 solidaire de ladite projection renforçant ainsi la tenue de ladite lèvre.

Le profilé représenté aux figures 3 et 4 peut être pourvu d'une peau pelable (non représentée) appliqué également par extrusion simultanée sur la surface de la lèvre 7 pour la protéger temporairement; cette peau pelable peut être, par exemple, en PVC-nitrile et recouvrir une lèvre 7 en EPT solidaire par extrusion d'un talon 6 en PVC.

La figure 5 est une vue en coupe transversale d'un joint de carrosserie à lèvre annulaire 12 en caoutchouc, solidarisée par extrusion avec un talon 13 en polypropylène le long de leur surface de contact 14, cette solidarisation étant renforcée par la disposition de projections d'ancrage 15 extrudées, en caoutchouc, emprisonnées dans le polypropylène du talon 13.

La figure 6 est une vue en coupe transversale d'un joint de clips de serre où la partie en élastomère tel que caoutchouc, 16, et la partie en plastomère tel que TPO, 17, sont solidarisées par extrusion, le long de leur surface de contact 18, cette solidarisation étant renforcée par la disposition des projections d'ancrage 19, qui se projettent à partir de la partie 16 en élastomère, dans la partie 17 en plastomère.

La figure 7 est une vue en coupe transversale d'un profilé utilisable en tant que joint de caravane, par exemple, et susceptible de se substituer avantageusement aux joints actuels qui sont réalisés totalement en caoutchouc cellulaire, en raison de la réduction du prix de revient qu'il entraîne. Un tel joint comporte une lèvre annulaire 20 an caoutchouc cellulaire dont la solidarisation avec le talon 21 en PVC est réalisée par liaison par extrusion au niveau de la surface de contact 22 et par accrochage mécanique par l'intermédiaire des projections 23.

Alors que dans les figures 3 à 7, les projections d'ancrage sont venues d'extrusion avec la lèvre d'étanchéité en caoutchouc, la figure 8 montre une vue partielle en coupe d'une bande de protection latérale de véhicule, machine ou analogue, qui comporte une bande de plastomère 24 - tel que PVC par exemple - solidarisée avec une bande de caoutchouc 25, par extrusion, le long de leur surface de contact 26, cette solidarisation étant renforcée par les projections d'ancrage 27 venues d'extrusion avec la bande de plastomère 24 et en même matériau que cette dernière. La bande en PVC 24 porte sur sa face opposée à la surface de contact 26, une couche adhésive 28 destinée à permettre la mise en place des bandes de protection ainsi formées, sur des carrosseries de voitures, de machines, etc.

## Revendications

1. Procédé pour extruder des profilés comprenant au moins une première et une seconde partie ayant des propriétés mécaniques et physiques différentes, la première partie (1, 6, 13, 17, 21) ayant les propriétés des plastomères et étant réalisée en au moins une première composition thermoplastique tandis que la seconde partie (2, 7, 12, 60, 20, 25) a les propriétés des élastomères et est réalisée en au moins une seconde composition vulcanisable, lesdites première et seconde parties étant réalisées à partir de compositions extrudables en alimentant une seule filière d'extrusion où elles sont envoyées simultanément, caractérisé en ce que :

   . les deux compositions constituées par l'un des couples de matières : polyéthylène-EPDM ; polypropylène-EPDM ; chlorure de polyvinyle (éventuellement surchloré)-caoutchouc nitrile ; EPDM-TPO (compositiion contenant un polypropylène et un EPDM dans une proportion appropriée, notamment de 90% et 10% en poids, respectivement) sont alimentées pour n'entrer pratiquement en contact l'une avec l'autre que dans la filière ;

   . le profil extrudé est refroidi en dessous du point de ramolissement de la composition formant la première partie ; et

   . on vulcanise ensuite la seconde partie du profilé extrudé.

2. Procédé selon la revendication 1, caractérisé en ce que la première composition présente un point de ramollissement nettement supérieur à la température optimale de vulcanisation de la seconde composition, et en ce que le profilé extrudé est refroidi à ladite température optimale de vulcanisation puis vulcanisé en continu à cette température, notamment, par passage continu dans un four à air chaud.

3. Procédé selon la revendication 1, caractérisé en ce que la première composition présente un point de ramollissement relativement voisin de la température optimale de vulcanisation de la seconde composition, et en ce que le profilé extrudé est refroidi en-dessous du point de ramollissement de la première composition, puis soumis à un traitement continu de vulcanisation par chauffage préférentiel de sa seconde par-

EP 0 209 453 B2

tie, notamment, par passage continu du profilé dans un four à ultra-haute-fréquence ou dans un four à infra-rouge selon que la seconde composition est polaire ou non.

4. Procédé selon l'une quelconque des revendications 1 à 3, caractérisé en ce que la première composition est un mélange d'au moins un plastomère et un élastomère en proportions telles qu'elle soit thermoplastique.

5. Procédé selon la revendication 4, caractérisé en ce que la première composition contient 5 à 20% en poids d'élastomère.

6. Procédé selon l'une quelconque des revendications 1 à 5, caractérisé en ce que la seconde composition est un mélange d'au moins un élastomère et un plastomère, en proportions telles qu'elle soit vulcanisable.

7. Procédé selon la revendication 6, caractérisé en ce que la seconde composition contient 5 à 0% en poids de plastomère.

8. Procédé selon l'une quelconque des revendications 1 à 7, caractérisé en ce que pour améliorer encore l'adhérence des matières plastomères et élastomères l'une à l'autre, on pourvoit la face de contact (8, 14, 18, 22, 26) de l'une des parties (7, 12, 16, 20, 24) en élastomère ou en plastomère, avec l'autre partie (6, 13, 17, 21, 25) d'une languette (9, 15, 19, 23, 27) en même matériau, qui en est solidaire, qui avance dans cette autre partie et qui présente un profil propre à assurer une liaison mécanique avec ladite autre partie dans laquelle elle est emprisonnée.

9. Procédé selon l'une quelconque des revendications 1 à 8, caractérisé en ce que, outre les première et deuxième compositions extrudables, la filière d'extrusion est alimentée avec une troisième composition extrudable qui présente les propriétés des peaux pelables et qui est appliquée de préférence sur la surface extérieure de la partie en élastomère du profilé.

10. Procédé selon l'une quelconque des revendications 1 à 9, caractérisé en ce que la partie en plastomère (24) est pourvue sur sa face opposée à sa face de jonction (26) avec la partie en élastomère (25), d'une couche de matière adhésive (28).

**Patentansprüche**

1. Verfahren zum Extrudieren von Profilen, die wenigstens einen ersten und einen zweiten Teil umfassen, welche unterschiedliche mechanische und physikalische Eigenschaften haben, wobei der erste Teil (1, 6, 13, 17, 21) die Eigenschaften von Plastomeren hat und aus wenigstens einer ersten thermoplastischen Zusammensetzung ausgeführt ist, während der zweite Teil (2, 7, 12, 16, 20, 25) die Eigenschaften von Elastomeren hat und aus wenigstens einer zweiten, vulkanisierbaren Zusammensetzung ausgeführt ist, wobei der erste und zweite Teil von extrudierbaren Zusammensetzungen ausgeführt werden, indem ein einziges Extrusionsmundstück gespeist wird, wohin sie gleichzeitig geschickt werden, dadurch **gekennzeichnet,** daß
   - die beiden Zusammensetzungen, die von einem der Stoffpaare: Polyethylen-EPDM; Polypropylen-EPDM; Polyvinylchlorid (eventuell überchloriert)-Kautschuknitril; EPDM-TPO (eine Zusammensetzung, die ein Polypropylen und ein EPDM in einem ange messenen Verhältnis, insbesondere von 90 Gewichtsprozent bzw. 10 Gewichtsprozent, enthält) gebildet sind, so eingespeist werden, daß sie praktisch nur in dem Mundstück miteinander in Kontakt treten;
   - das extrudierte Profil unter den Erweichungspunkt der Zusammensetzung gekühlt wird, welche den ersten Teil bildet; und
   - man dann den zweiten Teil des extrudierten Profils vulkanisiert.

2. Verfahren nach Anspruch 1, dadurch **gekennzeichnet,** daß die erste Zusammensetzung einen Erweichungspunkt aufweist, der deutlich über der optimalen Vulkanisationstemperatur der zweiten Zusammensetzung ist, und daß das extrudierte Profil auf diese optimale Vulkanisationstemperatur gekühlt und danach fortlaufend bei dieser Temperatur vulkanisiert wird, und zwar insbesondere durch fortlaufendes Durchlaufen in einem Heißluftofen.

3. Verfahren nach Anspruch 1, dadurch **gekennzeichnet,** daß die erste Zusammensetzung einen Erweichungspunkt hat, der relativ in der Nähe der optimalen Vulkanisationstemperatur der zweiten Zusammensetzung ist, und daß das extrudierte Profil unter den Erweichungspunkt der ersten Zusammensetzung gekühlt, danach einer fortlaufenden Vulkanisationsbehandlung durch bevorzugte Erwärmung des zweiten Teils unterworfen wird, insbesondere durch fortlaufendes Hindurchgehen des Profils in einem Ofen mit Ultrahochfrequenz oder in einem Ofen mit Infrarot, je nachdem, ob die zweite Zusammensetzung polar ist oder nicht.

4. Verfahren nach irgendeinem der Ansprüche 1 bis 3, dadurch **gekennzeichnet,** daß die erste Zusammensetzung eine Mischung von wenigstens einem Plastomer und einem Elastomer in Verhältnissen ist, derart, daß sie thermoplastisch ist.

5. Verfahren nach Anspruch 4, dadurch **gekennzeichnet,** daß die erste Zusammensetzung 5 bis 20 Gewichtsprozent Elastomer enthält.

6. Verfahren nach irgendeinem der Ansprüche 1 bis 5, dadurch **gekennzeichnet,** daß die zweite Zusammensetzung eine Mischung von wenigstens einem Elastomer und einem Plastomer in Verhältnissen ist, derart, daß sie vulkanisierbar ist.

7. Verfahren nach Anspruch 6, dadurch **gekennzeichnet,** daß die zweite Zusammensetzung 5 bis 0 Gewichtsprozent Plastomer enthält.

8. Verfahren nach irgendeinem der Ansprüche 1 bis 7, dadurch **gekennzeichnet,** daß zur weiteren Verbesserung des Haftens des plastomeren und elastomeren Stoffs aneinander die Kontaktfläche (8, 14, 18, 22, 26) des einen der Teile (7, 12, 16, 20, 24) aus Elastomer oder aus Plastomer mit dem anderen Teil (6, 13, 17, 21, 25) mit einer Zunge (9, 15, 19, 23, 27) aus dem gleichen Material versehen wird, die damit zusammenhängt, welche in diesen anderen Teil vorsteht und welche ein zum Sicherstellen einer mechanischen Verbindung mit diesem anderen Teil, in welchem sie eingefangen ist, geeignetes Profil aufweist.

9. Verfahren nach irgendeinem der Ansprüche 1 bis 8, dadurch **gekennzeichnet,** daß das Extrusionsmundstück, abgesehen von der ersten und zweiten extrudierbaren Zusammensetzung, mit einer dritten extrudierbaren Zusammensetzung gespeist wird, welche die Eigenschaften von schälbaren Häuten aufweist, und welche vorzugsweise auf die äußere Oberfläche des Teils aus Elastomer des Profils aufgebracht wird.

10. Verfahren nach irgendeinem der Ansprüche 1 bis 9, dadurch **gekennzeichnet,** daß der Teil aus Elastomer (24) auf seiner Fläche, die seiner Fläche der Verbindung (26) mit dem Teil aus Elastomer (25) entgegengesetzt ist, mit einer Schicht von Klebstoff (28) versehen wird.

## Claims

1. A process for extruding profiles comprising at least one first part and one second part having different physical and mechanical properties, the first part (1, 6, 13, 17, 21, 14) having the properties of plastomers and being made of at least one first thermoplastic compound, whilst the second part (2, 7, 12, 16, 20, 25) has the properties of elastomers and is made of at least one second vulcanizable compound, said first and second parts being made from extrudable compounds by feeding a single extrusion die to which they are sent simultaneously, characterized in that:
   - the two compounds constituted by one of the pairs of materials: polyethylene-EPDM; polypropylene-EPDM; polyvinyl chloride (possibly postchlorinated)- nitrile rubber; EPDM-TPO (compound containing a polypropylene and an EPDM in a suitable proportion, especially 90% and 10% respectively) are fed so as to come into contact with one another only inside the die;
   - the extruded profile is cooled to below the softening point of the compound forming the first part; and
   - the second part of the extruded profile is then vulcanized.

2. A process according to claim 1, characterized in that the first compound has a softening point clearly higher than the optimum vulcanization temperature of the second compound, and in that the extruded profile is cooled to said optimum vulcanization temperature and is then continuously vulcanized at this temperature, in particular by continuous passage through a hot air oven.

3. A process according to claim 1, characterized in that the first compound has a softening point relatively close to the optimum vulcanization temperature of the second compound, and in that the extruded profile is cooled below the softening point of the first compound and then undergoes a continuous vulcanization treatment by the preferential heating of its second part, in particular by continuous passage of the profile in an ultra-high frequency oven or an infra-red oven, depending on whether or not the second compound is polar.

4. A process according to any one of claims 1 to 3, characterized in that the first compound is a mixture of at least one plastomer and one elastomer in such proportions that said compound is thermoplastic.

5. A process as claimed in claim 4, characterized in that the first compound contains 5 to 20% by weight of elastomer.

6. A process according to any one of claims 1 to 5, characterized in that the second compound is a mixture of at least one elastomer and one plastomer in such proportions that said compound is vulcanizable.

7. A process according to claim 6, characterized in that the second compound contains 5 to 0% by weight of plastomer.

8. A process according to any one of claims 1 to 7, characterized in that, in order to further improve the adherence of the elastomer and plastomer materials to one another, the contact side (8, 14, 18, 22, 26) of one of the elastomer or plastomer parts (7, 12, 16, 20, 24) with the other part (6, 13, 17, 21, 25) is provided with a tongue (9, 15, 19, 23, 27) made of the same material integral therewith, which advances into this other part and which has a profile suitable for providing a mechanical linkage with said other part in which it is confined.

9. A process according to any one of claims 1 to 8, characterized in that, apart from the first and second extrudable compounds, the extrusion die is fed with a third extrudable compound which has the properties of strippable skins and which is preferably applied to the outer surface of the elastomer part of the profile.

10. A process according to any one of claims 1 to 9, characterized in that the plastomer part (24), on its side opposite its junction side (26) along with the elastomer part (25), is provided with a layer of an adhesive material (28).

FIG.1

FIG. 2

FIG.8

FIG. 3

FIG. 5

FIG. 6

FIG.4

FIG. 7